(19) Europäisches Patentamt
European Patent Office
Office européen des brevets

(11) Veröffentlichungsnummer : **0 043 500**
**B1**

(12) # EUROPÄISCHE PATENTSCHRIFT

(45) Veröffentlichungstag der Patentschrift : **13.06.84**

(51) Int. Cl.³ : **C 09 D 5/40**, C 08 C 19/20, C 08 C 19/38

(21) Anmeldenummer : **81104880.0**

(22) Anmeldetag : **24.06.81**

(54) **Neue Bindemittel, Verfahren zu ihrer Herstellung und ihre Verwendung zur Elektrotauchlackierung.**

(30) Priorität : **05.07.80 DE 3025558**

(43) Veröffentlichungstag der Anmeldung : **13.01.82 Patentblatt 82/02**

(45) Bekanntmachung des Hinweises auf die Patenterteilung : **13.06.84 Patentblatt 84/24**

(84) Benannte Vertragsstaaten : **AT DE FR GB IT NL SE**

(56) Entgegenhaltungen :
**DE-A- 2 411 350**
**FR-A- 2 148 305**
**FR-A- 2 335 530**
**US-A- 3 689 450**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Rössert, Michael, Dr.**
**Fastlinger Ring 187**
**D-8044 Unterschleissheim (DE)**
Erfinder : **Dhein, Rolf, Dr.**
**Deswatinesstrasse 30**
**D-4150 Krefeld (DE)**
Erfinder : **Witte, Josef, Dr.**
**Haferkamp 10**
**D-5000 Koeln 80 (DE)**
Erfinder : **Wieder, Wolfgang, Dr. c/o Bayer France S.A.**
**Division Production Polyméres Boite Postale 41**
**F-76170 Lillbonne (FR)**
Erfinder : **Schoeps, Jochen, Dr.**
**Windmuehlenstrasse 126**
**D-4150 Krefeld 1 (DE)**

**EP 0 043 500 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Bindemittel auf Basis Mercaptanmodifizierter Polybutadiene, ein Verfahren zu ihrer Herstellung und ihre Verwendung zur kathodischen Elektrotauchlackierung.

Bindemittel für elektrophoretische Abscheidungsverfahren sind bekannt. In der Vergangenheit hat man hauptsächlich Verfahren angewandt, in denen das Bindemittel an der Anode abgeschieden worden war. Die für diesen Zweck eingesetzten Bindemittel enthielten mit Basen neutralisierte Carboxylgruppen. Die entstehenden Überzüge erwiesen sich meist als nicht ausreichend chemikalienfest, insbesondere als nicht alkaliresistent, und infolge des anodisch aus den Metallsubstraten gelösten Ionen neigten sie zu chemischen Veränderungen, die z. B. in Verfärbung und Fleckenbildung zum Ausdruck kamen.

Neuerdings geht man zunehmend zur kathodischen Elektrotauchlackierung über. Da die hierbei eingesetzten Bindemittel in der Regel keine freien Carboxylgruppen, die die Reaktion mit Vernetzungskomponenten, wie z. B. Melaminformaldehydharzen, katalysieren, enthalten, ist die zusätzliche Verwendung von stark sauren Katalysatoren zur Beschleunigung der Vernetzungsreaktion notwendig. Badstabilität, Verarbeitbarkeit und Filmeigenschaften werden dadurch allerdings negativ beinflußt.

Man hat auch kathodisch abscheidbare Bindemittel entwickelt, die keine sauren Agentien enthalten müssen. Aus der DE-OS 2 131 060 sind z. B. solche Bindemittel bekannt, die lösliche Polyaminharze und verkappte Polyisocyanate als Vernetzer enthalten. In diesem Fall liegt also ein Zweikomponentensystem vor, so daß sich oft Probleme der Badstabilität ergeben. Darüber hinaus verlangt die Härtung mittels verkappter Polyisocyanate hohe Temperaturen und längere Härtungszeiten.

Aus der DE-OS 2 252 536 sind kathodisch abscheidbare Bindemittel, die Amino-, Hydroxyl- und verkappte Isocyanatgruppen enthalten, bekannt. Auch in diesem Fall erfordern Deblockierung und anschließende Addition der Isocyanatgruppen hohe Temperaturen bei längerer Reaktionszeit.

Gemäß US 3 883 483 werden Aminoalkylmonomere, Reaktionsprodukte von halbblockierten Diisocyanaten und Hydroxyalkylacrylaten und gegebenenfalls andere ungesättigte Monomere zu Copolymerisaten umgesetzt, die sich als kathodisch abscheidbare Elektrotauchlackbindemittel eignen. Die Deblockierung der Isocyanatgruppen ist mit den schon oben beschriebenen Nachteilen verbunden.

Weiterhin wurde bereits vorgeschlagen, Umsetzungsprodukte aus epoxidierten Dienpolymerisaten und Aminen als kathodisch abscheidbare Elektrotauchlackbindemittel einzusetzen. Sie liefern jedoch oft Überzüge ohne einwandfreien Umgriff, die frisch applizierten Überzüge lassen sich wegen ihrer gallertartigen Konsistenz schlecht von anhaftendem Badmaterial freispülen, die hohe Thermoplastizität begünstigt ein Abfließen des Überzuges von den Kanten während des Temperaturanstiegs beim Einbrennvorgang, und die Überzüge erreichen unter den üblichen Einbrennbedingungen nicht ganz die nötige Glätte und Härte.

Die FR-PS 2 335 530 betrifft Sulfonium-haltige Bindemittel auf Polybutandienbasis, die auch zur kataphoretischen Abscheidung geeignet sind. Weder die Aufzählung geeigneter Epoxide auf Seite 3, Zeilen 7-11, noch die Beispiele enthalten irgendeinen Hinweis darauf, daß die eingesetzten Epoxidverbindungen eine polymerisierbare Doppelbindung enthalten sollten.

Es wurde nun gefunden, daß durch die Wahl eines geeigneten Bindemittels die geschilderten Nachteile weitestgehend vermieden werden können, so daß der Fachwelt nun kathodisch abscheidbare Elektrotauchlacke mit einer bislang unerreichten Kombination wünschenswerter Eigenschaften zur Verfügung stehen.

Gegenstand der Erfindung sind Reaktionsprodukte aus

a) 50-95 Gew.-% mindestens eines Dienpolymerisats mit einem mittleren Molekulargewicht $M_n$ von 500 bis 10 000 und einer OH-Zahl von 0 bis 200,

b) 5 bis 50 Gew.-% Glycidylacrylat und/oder -methacrylat und

c) 0 bis 10 Gew.-% an wäßriger Säure,

wobei sich die obigen Prozentangaben auf die Summe der Komponenten a), b), und c) beziehen, dadurch gekennzeichnet, daß die Dienpolymerisate a) 1-15 Gew.-%, bezogen auf a), chemisch eingebauten Schwefel enthalten.

Weiterer Gegenstand der Erfindung ist ein Verfahren zur Herstellung dieser Reaktionsprodukte, dadurch gekennzeichnet, daß man die Komponenten a), b) und gegebenenfalls c) bei 30-110 °C, vorzugsweise bei 70-90 °C, solange umsetzt, bis das Reaktionsprodukt mit Wasser zu einer stabilen Dispersion mit einem Festkörpergehalt von 5 bis 25, vorzugsweise 8 bis 20, insbesondere 10 Gew.-% verdünnt werden kann.

Ein weiterer Gegenstand der Erfindung ist die Verwendung dieser Reaktionsprodukte als Bindemittel für kathodisch abscheidbare Elektrotauchlacke.

Die erfindungsgemäßen Produkte weisen im Rückgrat des Polymeren oder in dessen Seitenketten noch eine erhebliche Anzahl von Kohlenstoff-Kohlenstoff-Doppelbindungen auf, die durch Polymerisation bzw. unter Einwirkung des Sauerstoffs der Luft für die Vernetzung der Überzüge nutzbar gemacht werden können. Zusätzliche Vernetzer werden nicht benötigt. Das Rückgrat des Polymeren ist verseifungsbeständig, so daß die daraus hergestellten Überzüge weitgehend chemikalienresistent sind.

Die erfindungsgemäßen Produkte sind unmittelbar nach der Herstellung — ohne weitere Neutralisation oder Lösungsmittelzugabe — mit Wasser verdünnbar.

Dienpolymerisate a) mit chemisch eingebautem Schwefel werden vorzugsweise durch Umsetzung von 60 bis 98 Gew.-Teilen Dienpolymerisat mit 2 bis 40 Gew.-Teilen Mercaptan hergestellt.

Bevorzugte Dienpolymerisate sind Homo- und Copolymerisate von Dienen mit 4 bis 8 C-Atomen, wie Butadien-1,3, Isopren, Cyclopentadien, Methylcyclopentadien, Chloropren, 2,3-Dimethylbutadien-1,3 sowie Copolymerisate dieser Diene mit anderen mischpolymerisierbaren Verbindungen, wobei die Copolymerisate jeweils mindestens 20, vorzugsweise mindestens 50, Gew.-% einkondensierter Reste von Dienen enthalten sollten. « Andere mischpolymerisierbare Verbindungen » sind vorzugsweise Styrol, α-Methylstyrol, (Meth)Acrylsäureester, Vinylester, wie z. B. Vinylacetat, aber auch ungesättigte Fettsäuren und ungesättigte Öle, z. B. Leinöl, Sojaöl, Holzöl, Safflorö, Ricinusöl, Ricinenöl, Baumwollsaatöl, Tallöl, die Fettsäuren dieser Öle und durch Konjugierung oder Isomerisierung dieser Fettsäuren und Öle gewonnene Produkte ebenso wie Addukte der genannten Polymerisate mit Phenolharzen. Die in die Copolymerisate eingebauten Monomereinheiten können in Blockform oder in statistischer Verteilung vorliegen.

Bevorzugte Mercaptane zur Herstellung der Schwefelhaltigen Dienpolymerisate entsprechen den Formeln I und II

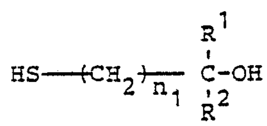

(I)

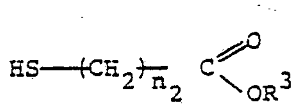

(II)

worin

$R^1$, $R^2$ und $R^3$ Wasserstoff oder einen geradkettigen oder verzweigten Alkyl- oder Arylrest darstellen und

$n_1$ ganze Zahlen von 1-4 und

$n_2$ ganze Zahlen von 1-5 bedeuten.

Als Mercaptane der Formel (I) seien bevorzugt Verbindungen erwähnt, in denen $R^1$ und $R^2$ Wasserstoff, $C_{1-3}$-Alkyl oder Phenyl bedeuten. Als Alkylrest seien besonders Methyl und Ethylreste hervorgehoben. Beispielhaft sei 2-Mercapto-ethanol (Thioglykol), 2-Mercaptoisopropanol, 1-Phenyl-2-mercaptoethanol, 3-Mercaptopropanol und 4-Mercaptobutanol erwähnt.

Als Mercaptane der Formel (II) seien bevorzugt Verbindungen erwähnt, in denen $R^3$ Wasserstoff oder einen $C_{1-4}$-Alkylrest wie Methyl, Ethyl, Propyl, iso-Propyl, Butyl, iso-Butyl, tert.-Butyl darstellt. Beispielhaft seien Thioglykolsäure und Thioglykolsäureester erwähnt.

Bindemittel auf Basis von Schwefel-haltigen Dienpolymerisaten a), zu deren Herstellung Mercaptane mit mindestens einer Hydroxylgruppe verwendet werden, weise aufgrund des hohen Hydroxylgehalts sehr guten Korrosionsschutz, hervorragende Haftung und überdurchschnittliche Pigmentbenetzung auf.

Verfahren zur Herstellung Schwefel-haltiger Dienpolymerisate a) sind bekannt (DE-AS 11 08 424).

Bevorzugte Schwefel-haltige Dienpolymerisate a) sind solche auf Basis von mit Mercaptanen modifiziertem Polybutadien mit einem 1,2-Doppelbindungsanteil von 30-60 % und einem mittleren Molekulargewicht $\bar{M}_n$ zwischen 500 und 10 000, vorzugsweise 600-3 000.

Die Komponente a) kann aus einem oder mehreren Dienpolymerisaten bestehen, wobei der durchschnittliche Schwefelgehalt innerhalb der oben angegebenen Grenzen liegen muß, und zwar unabhängig davon, ob nur eines, mehrere oder alle der eingesetzten Dienpolymerisate Schwefel enthalten.

Vorzugsweise werden die Mengen a) und b) so gewählt, daß 0,2 bis 1,3, vorzugsweise 0,6 bis 1,0 Mol Epoxidgruppen pro Mol Sulfidgruppe zum Einsatz gelangen.

Als Säure c) kann eine beliebige Säure Verwendet werden, die mit a) und b) ein Sulfoniumsalz bildet. Vorzugsweise ist die Säure c) aber eine organische Carbonsäure. Beispiele von bevorzugten Säuren sind Borsäure, Ameisensäure, Milchsäure, Essigsäure, Propionsäure, Buttersäure, Salzsäure, Phosphorsäure und Schwefelsäure. Die Säure hat vorzugsweise eine Dissoziationskonstante von größer als $1 \times 10^{-5}$.

Das Verhältnis von Dienpolymerisat a) zu Säure c) ist nicht besonders kritisch. Da ein Mol Säure für die Bildung eines Mols einer Sulfoniumgruppe verwendet wird, wird bevorzugt mindestens ein Mol bzw. ein Äquivalent Säure für jedes gewünschte Mol der Umwandlung von Sulfid zu Sulfonium verwendet.

Die erfindungsgemäßen Reaktionsprodukte können zusätzlich 1 bis 60 Gew.-%, bezogen auf die Summe des Komponenten a), b) und c), ungesättigter Öle oder ethylenisch ungesättigter Monomerer addiert bzw. aufgepfropft enthalten.

Als zusätzliche ungesättigte Öle können alle oben erwähnten Dienpolymerisate, Copolymerisate, Addukte, Blockpolymerisate, Fettsäuren und Öle eingesetzt werden. Das zusätzliche ungesättigte Öl ist entweder an das erfindungsgemäße Reaktionsprodukt addiert oder/und wird von diesem in wäßriger Lösung emulgiert. Der Hauptvorteil dieser zusätzlichen ungesättigten Öle liegt in der guten erreichbaren

Vernetzungsdichte im eingebrannten Lack.

Es ist auch möglich, durch Addition halbblockierter Diisocyanate an das hydroxylgruppenhaltige Polymerisat ein Bindemittel zu bekommen, welches zusätzliche Vernetzungsstellen enthält. Dies ist jedoch nur dann von Nutzen, falls die Doppelbindungsanzahl allein nicht ausreicht, um eine gute Vernetzung im eingebrannten Lack zu erzielen.

Es können auch wasserlösliche und/oder wasserunlösliche Lösungsmittel, wie beispielsweise Methanol, Ethanol, Propanol, Isopropanol, Ethylenglykolmonomethyl-, ethyl-, isopropyl- und butylether, Diethylenglykol, Mono- und Diether des Diethylenglykols, Dimethylformamid, Dimethylsulfoxid, Dioxan, Methylethylketon, Cyclohexanon, Benzin und Xylol mit eingesetzt werden, um eine leichtere Umsetzung zu erreichen. Gleichzeitig wird durch den Lösungsmittelanteil ein besserer Verlauf des Lackes beim Einbrennen erzielt. Der Lösungsmittelanteil sollte jedoch nicht zu groß, vorzugsweise nicht über (10 % (bezogen auf die mit Wasser verdünnte, kathodisch abscheidbare Beschichtungsmasse), sein, da sonst der Widerstand des abgeschiedenen Films während der Beschichtung nicht genügend abnimmt, wodurch dicke schwammige Überzüge gebildet werden können.

Zur Verbesserung der lacktechnischen Eigenschaften ist es möglich, in einem ersten Schritt das Schwefel-haltige Dienpolymerisat a) mit 1-60 Gew.-% ungesättigten Ölen mit mittleren Molekulargewichten von 500 bis 10 000 und einer Viskosität von 0,3 bis 20 Pa.s (gemessen bei 20 °C) bei einer Temperatur von 50-280 °C, vorzugsweise 180-250 °C, teilweise oder ganz umzusetzen.

Desweiteren ist es möglich, das sulfidgruppen- und hydroxylgruppenhaltige Material bei einer Temperatur von 50-130 °C mit einem halbverkappten Diisocyanat umzusetzen, gegebenenfalls in Gegenwart eines Isocyanat-inerten Lösungsmittels.

Die Umsetzung der Komponenten a), b) und gegebenenfalls c) ist in der Regel nach 5 Stunden beendet.

Die wäßrigen Lackdispersionen können alle üblichen Pigmente, Füllstoffe und Lackhilfsmittel enthalten. Zusätzlich können Phenol-, Harnstoff- und Melaminharze mit eingesetzt werden.

Der pH-Wert des Bades liegt Zwischen 3 und 8, vorzugsweise bei 3,5 bis 7.

Die kathodisch zu beschichtenden Gegenstände und die Anode werden in gleicher Weise, wie es für die elektrophoretische Abscheidung bekannt ist, in das Beschichtungsbad getaucht.

Während der Abscheidung wird das Bad zweckmäßig auf Temperaturen von 20-30 °C gehalten.

Die anzulegende Spannung beträgt 10-500 Volt, vorzugsweise 50-300 Volt.

Die Überzüge trocknen bereits bei Raumtemperatur. In 20-30 Minuten bei 150-200 °C entstehen besonders festhaftende wasserbeständige Lackfilme mit außergewöhnlich hoher Korrosionsbeständigkeit.

Die im nachfolgenden Beispiel angegebenen Teile sind Gewichtsteile.

## Beispiel

50 Teile eines mit Thioglykol modifizierten Polybutadienöld mit einem mittleren Molekulargewicht $M_n$ von 1 200, einer OH-Zahl von 127 und einem Schwefelgehalt von 7,1 Gew.-% und 10 Teile eines nichtmodifizierten Polybutadienöls mit 72 % cis-, 27 % trans- und 1 % Vinyl-Doppelbindungen, einem mittleren Molekulargewicht von ca. 1 500, einer Jodzahl von 450 und einer bei 20 °C bestimmten Viskosität von 750 mPas werden unter Stickstoffatmosphäre innerhalb von 3 Stunden auf 240 °C erwärmt und nach Erreichen dieser Temperatur auf 25 °C abgekühlt. Zu dieser Reaktionsmischung gibt man 10 Teile Butylglykol, 10 Teile Wasser, 11,9 Teile wäßrige Milchsäure (8,5 Teile Milchsäure und 3,4 Teile Wasser) und 0,1 Teile Hydrochinon, erwärmt diese Mischung unter Rühren auf 90 °C und tropft innerhalb von etwa 10 Minuten 13,3 Teile Glycidylmethacrylat zu. Anschließend wird 4 Stunden bei 90 °C nachgerührt.

60 Teile dieses Produktes werden mit 300 Teilen Wasser verdünnt. Die Beschichtungslösung besitzt eine Leitfähigkeit von 720 µs und einen pH-Wert von 3,8 und einen Lösungsmittelgehalt (Butylglykol) von ca. 1,3 %.

Die Beschichtung wird mittels eines als Kathode geschalteten entfetteten Eisenbleches (6,5 × 16,3 cm) und eines als Anode geschalteten Kohlestabes mit einer Abscheidungsdauer von 2 Minuten durchgeführt und ergibt nach gutem Waschen der Überzüge und anschließendem Einbrennen (20 Minuten bei 180 °C) folgende Ergebnisse :

| Abscheide-spannung (Volt) | Stromstärke (mA) Anfang - Ende | Bleistift-härte | Schichtdicke (µm) |
|---|---|---|---|
| 50 | 400 - 37 | 5 H | 15 |
| 85 | 700 - 35 | 5 H | 30 |

Die eingebrannten Beschichtungen zeigen einen guten Verlauf.

**Ansprüche**

1. Reaktionsprodukte aus
a) 50-95 Gew.-% mindestens eines Dienpolymerisats mit einem mittleren Molekulargewicht $M_n$ von 500 bis 10 000 und einer OH-Zahl von 0 bis 200,
b) 5 bis 50 Gew.-% Glycidylacrylat und/oder -methacrylat und
c) 0 bis 10 Gew.-% an wäßriger Säure, wobei sich die obigen Prozentangaben auf die Summe der Komponenten a), b) und c) beziehen,
dadurch gekennzeichnet, daß die Dienpolymerisate a) 1-15 Gew.-%, bezogen auf a), chemisch eingebauten Schwefel enthalten.

2. Reaktionsprodukte nach Anspruch 1, dadurch gekennzeichnet, daß sie zusätzlich 1-60 Gew.-%, bezogen auf die Summe der Komponenten a), b) und c), ungesättigter Öle oder ethylenisch ungesättigter Monomerer addiert bzw. aufgepfropft enthalten.

3. Verfahren zur Herstellung der Reaktionsprodukte nach Ansprüchen 1 und 2, dadurch gekennzeichnet, daß man die Komponenten a), b) und gegebenenfalls c) bei 30-110 °C, vorzugsweise bei 70-90 °C, solange umsetzt, bis das Reaktionsprodukt mit Wasser zu einer stabilen Dispersion mit einem Festkörpergehalt von 5 bis 25, vorzugsweise 8 bis 20, Gew.-% verdünnt werden kann.

4. Verfahren nach Anspruch 3, dadurch gekennzeichnet, daß man das Schwefel-haltige Dienpolymerisat a) vor der Umsetzung mit den Komponenten b) und c) mit 1 bis 60 Gew.-%, bezogen auf die Summe der Komponenten a), b) und c) eines ungesättigten Öles mit einem mittleren Molekulargewicht $M_n$ von 500 bis 10 000 und einer Viskosität von 0,3 bis 20 Pa.s (gemessen bei 20 °C) bei einer Temperatur von 50 bis 280 °C umsetzt.

5. Verfahren nach Ansprüchen 3 und 4, dadurch gekennzeichnet, daß man die Mengen a) und b) so wählt, daß 0,2 bis 1,3 Mol Epoxidgruppen pro Mol Sulfidgruppe zum Einsatz gelangen.

6. Verfahren nach Anspruch 5, dadurch gekennzeichnet, daß das Molverhältnis Epoxid/Sulfid 0,6 bis 1 beträgt.

7. Verwendung des Reaktionsprodukts nach Ansprüchen 1 und 2 als Bindemittel für kathodisch abscheidbare Elektrotauchlacke.

**Claims**

1. Reaction products of
a) 50-95 % by weight of at least one diene polymer having an average molecular weight $M_n$ of from 500 to 10 000 and an OH number of from 0 to 200,
b) 5 to 50 % by weight of glycidyl acrylate and/or glycidyl methacrylate and
c) 0 to 10 % by weight of aqueous acid, the percentages given above relating to the sum of components a), b) and c)
characterised in that the diene polymers a) contain from 1 to 15 % by weight, based on a), of chemically incorporated sulphur.

2. Reaction products according to Claim 1, characterised in that they contain, in addition, from 1 to 60 % by weight, based on the sum of components a), b) and c), of unsaturated oils or ethylenically unsaturated monomers, incorporated by addition of by grafting.

3. Process for the preparation of the reaction products according to Claims 1 and 2, characterised in that components a), b) and optionally c) are reacted at 30 to 110 °C, preferably at 70-90 °C until the reaction product is capable of being diluted with water to form a stable dispersion having a solids content of from 5 to 25 % by weight, preferably from 8 to 20 % by weight.

4. Process according to Claim 3, characterised in that, prior to its reaction with components b) and c), the diene polymer a) containing sulphur is reacted, at a temperature of from 50 to 280 °C, with from 1 to 60 % by weight, based on the sum of components a), b) and c), of an unsaturated oil having an average molecular weight $M_n$ of from 500 to 10,000 and a viscosity of from 0.3 to 20 Pa.s (determined at 20 °C).

5. Process according to Claims 3 and 4, characterised in that the quantities a) and b) are chosen so that from 0.2 to 1.3 mol of epoxide groups are put into the process per mol of sulphide group.

6. Process according to Claim 5, characterised in that the molar ratio of epoxide/sulphide is from 0.6 to 1.

7. Use of the reaction product according to Claims 1 and 2 as binders for cathodically separable electro immersion lacquers.

**Revendications**

1. Produits de réaction de
a) 50 à 95 % en poids d'au moins un produit de polymérisation diénique de poids moléculaire moyen $M_n$ allant de 500 à 10 000 et d'indice d'hydroxyle allant de 0 à 200,
b) 5 à 50 % en poids d'acrylate et/ou de méthacrylate de glycidyle et

c) 0 à 10 % en poids d'acide aqueux, les indications de pourcentages ci-dessus se rapportant à la somme des composants a), b) et c),
caractérisés en ce que les produits de polymérisation diéniques a) contiennent 1 à 15 % en poids, par rapport à a), de soufre incorporé chimiquement.

2. Produits de réaction suivant la revendication 1, caractérisés en ce qu'ils contiennent en outre 1 à 60 % en poids, par rapport à la somme des composants a), b) et c), d'huiles insaturées ou de monomères à non-saturation éthylénique additionnés ou fixés par greffage.

3. Procédé pour l'obtention des produits de réaction suivant les revendications 1 et 2, caractérisé en ce qu'on fait réagir les composants a), b) et, le cas échéant, c) à 30-110 °C, de préférence à 70-90 °C, jusqu'à ce que le produit de réaction puisse être dilué avec de l'eau pour former une dispersion stable à teneur en matières solides de 5 à 25, de préférence de 8 à 20 % en poids.

4. Procédé suivant la revendication 3, caractérisé en ce qu'on fait réagir le produit de polymérisation diénique a) contenant du soufre avant la réaction avec les composants b) et c) avec 1 à 60 % en poids, par rapport à la somme des composants a), b) et c), d'une huile insaturée de poids moléculaire moyen $M_n$ allant de 500 à 10 000 et de viscosité allant de 0,3 à 20 Pa.s (mesurée à 20 °C), à une température de 50 à 280 °C.

5. Procédé suivant les revendications 3 et 4, caractérisé en ce qu'on choisit les quantités a) et b) de manière à mettre en œuvre 0,2 à 1,3 mole de groupes époxyde par mole de groupe sulfure.

6. Procédé suivant la revendication 5, caractérisé en ce que le rapport molaire époxyde/sulfure a une valeur de 0,6 à 1.

7. Utilisation du produit de réaction suivant les revendications 1 et 2 comme liant pour laques de trempage électrophorétique pouvant être précipitées cathodiquement.